# EUROPEAN PATENT APPLICATION

(11) **EP 4 518 484 A1**
(43) Date of publication of application: **05.03.2025**
(21) Application number: 22939412.7
(22) Date of filing: 29.04.2022
(51) Int. Cl.: H04W 72/04

(54) **DEMODULATION REFERENCE SIGNAL PORT ALLOCATION METHOD AND APPARATUS FOR COORDINATED MULTI-ANTENNA PANEL TRANSMISSION**

(71) Applicant: Beijing Xiaomi Mobile Software Co., Ltd., Beijing 100085 (CN)
(72) Inventor: GAO, Xueyuan, Beijing 100085 (CN)
(74) Representative: Gunzelmann, Rainer
(86) International application number: PCT/CN2022/090780
(87) International publication number: WO 2023/206568

(57) **Abstract**

Disclosed in the embodiments of the present disclosure are a demodulation reference signal port allocation method and apparatus for coordinated multi-antenna panel transmission, which can be applied to communication systems, such as a long term evolution (LTE) system, a 5^{th} generation (5G) mobile communication system, a 5G new radio (NR) system, or other future novel mobile communication systems. The method comprises: reading a DMRS port allocation table according to DMRS configuration information and the number of transmission data RANK layers; and querying the DMRS port allocation table according to DMRS port allocation information, so as to determine a DMRS port configuration. In the embodiments of the present application, by means of receiving DMRS configuration information and downlink control information (DCI) signaling, which are provided by a network-side device, a terminal device determines DMRS port allocation corresponding to the RANK combinations that correspond to data layers which are sent in different TRP directions on different panels, thereby facilitating an improvement in the communication reliability and efficiency, and avoiding the wasting of the communication resources.

## Description

### TECHNICAL FIELD

The invention relates to the field of communication technologies, and in particular, to a demodulation reference signal port allocation method and apparatus for coordinated multiple antenna ports transmission.

### BACKGROUND

In wireless communication, communication is carried out through coordinated multiple points. Network devices are deployed in a distributed access point and baseband centralized manner. The antenna array on the network side can use multiple antenna panels or Transmission Reception Pairs (TRPs) to send/receive from multiple beams at multiple angles. During the uplink transmission process of multiple TRPs or TRPs, the data layer of data transmission in the Physical Uplink Shared Channel (PUSCH) corresponds to the demodulation reference signal (DMRS) port used for demodulation. However, there is currently a lack of flexible methods for assigning DMRS ports of the PUSCH to different panels.

### SUMMARY

Embodiments of the present invention provide a demodulation reference signal port allocation method and apparatus for coordinated multiple antenna panel transmission, which can be performed by communication systems such as Long Term Evolution (LTE) systems, 5th generation (5G) mobile communication systems, 5G new radio (NR) systems, or other future new mobile communication systems. Through DMRS configuration information and downlink control information (DCI) signaling, the DMRS port allocation corresponding to the RANK combination of sending data layers in different TRP directions on different panels, thereby improving communication efficiency and avoiding communication resource waste.

In a first aspect, embodiments of the present invention provide a demodulation reference signal (DMRS) port allocation method for coordinated multiple antenna panels transmission. The method is performed by a terminal and the method includes:
reading a DMRS port allocation table based on DMRS configuration information and a number of RANK layers for data transmission, in which the DMRS port allocation table includes at least one DMRS port configuration, the DMRS port configuration corresponds to a PUSCH for coordinated transmission sent based on multiple antenna panel facing a TRP, and the DMRS configuration information includes a DMRS type and a maximum number of front-load DMRS symbols; and
querying the DMRS port allocation table according to DMRS port allocation information, to determine DMRS port configuration, in which the DMRS port configuration is used to support RANK combinations for sending data transmission layers of different TRP directions on different panels.

Optionally, when the DMRS type is 1, the maximum number of front-load DMRS symbols is1 or 2, and a total number of RANK layers for data transmission is 3, the DMRS port configuration corresponding to the RANK combination of supporting 1 layer and 2 layers for sending data links facing different TRP directions through two panels is: DMRS port combination {0, 2, 3},
wherein, the DMRS port 0 is used to support that the number of data layers sent in the first beam information indication direction corresponds to the number of RANK layers of 1, the DMRS ports 2 and 3 are used to support that the number of data layers sent in the second beam information indication direction corresponds to the number of RANK layers of 2, and the DMRS ports 2 and 3 are quasi co-located.

Optionally, when the DMRS type is 2, the maximum number of front-load DMRS symbols is 1 or 2, and a total number of RANK layers for data transmission is 3, the DMRS port configuration corresponding to the RANK combination of supporting 2 layers and 1 layer for sending data links facing different TRP directions through two panels is: DMRS port combination {0, 1, 3},
wherein, the DMRS ports 0 and 1 are used to support that the number of data layers sent in the first beam information indication direction corresponds to the number of RANK layers of 2, the DMRS port 3 is used to support that the number of data layers sent in the second beam information indication direction corresponds to the number of RANK layers of 1, and the DMRS ports 0 and 1 are quasi co-located.

Optionally, when the DMRS type is 2, the maximum number of front-load DMRS symbols is 1 or 2, and a total number of RANK layers for data transmission is 3, the DMRS port configuration corresponding to the RANK combination of supporting 1 layer and 3 layers for sending data links facing different TRP directions through two panels is at least one of the following:
DMRS port combination {0, 2, 3},
DMRS port combination {0, 4, 5};
wherein, in the DMRS port combination {0, 2, 3}, the DMRS port 0 is used to support that the number of data layers sent in the first beam information indication direction corresponds to the number of RANK layers of 1, the DMRS ports 2, 3 are used to support that the number of data layers sent in the second beam information indication direction corresponds to the number of RANK layers of 2, and the DMRS ports 2 and 3 are quasi co-located;
wherein, in the DMRS port combination {0, 4, 5}, the DMRS port 0 is used to support that the number of data layers sent in the first beam information indication direction corresponds to the number of RANK layers of 1, the DMRS ports 4 and 5 are used to support that the number of data layers sent in the second beam information indication direction corresponds to the number of RANK layers of 2, and the DMRS ports 4 and 5 are quasi co-located.

Optionally, when the DMRS type is 2, the maximum number of front-load DMRS symbols is 1, and a total number of RANK layers for data transmission is 4, the DMRS port configuration corresponding to the RANK combination of supporting 2 layers and 2 layers for sending data links facing different TRP directions through two panels is DMRS port combination {0, 1, 4, 5},
wherein, the DMRS ports 0 and 1 are used to support that the number of data layers sent in the first beam information indication direction corresponds to the number of RANK layers of 2, the DMRS ports 4 and 5 are used to support that the number of data layers sent in the second beam information indication direction corresponds to the number of RANK layers of 2, the DMRS ports 0 and 1 are quasi co-located, and the DMRS ports 4 and 5 are quasi co-located.

Optionally, when the DMRS type is 2, the maximum number of front-load DMRS symbols is 2, and a total number of RANK layers for data transmission is 4, the DMRS port configuration corresponding to the RANK combination of supporting 2 layers and 2 layers for sending data links facing different TRP directions through two panels is at least one of the following:
DMRS port combination {0, 1, 4, 5},
DMRS port combination {0, 1, 8, 9},
DMRS port combination {0, 1, 10, 11};
wherein, in the DMRS port combination {0, 1, 4, 5}, the DMRS ports 0 and 1 are used to support that the number of data layers sent in the first beam information indication direction corresponds to the number of RANK layers of 2, the DMRS ports 4 and 5 are used to support that the number of data layers sent in the second beam information indication direction corresponds to the number of RANK layers of 2, the DMRS ports 0 and 1 are quasi co-located, and the DMRS ports 4 and 5 are quasi co-located;
wherein, in the DMRS port combination {0, 1, 8, 9}, the DMRS ports 0 and 1 are used to support that the number of data layers sent in the first beam information indication direction corresponds to the number of RANK layers of 2, the DMRS ports 8 and 9 are used to support that the number of data layers sent in the second beam information indication direction corresponds to the number of RANK layers of 2, the DMRS ports 0 and 1 are quasi co-located, and the DMRS ports 8 and 9 are quasi co-located;
wherein, in the DMRS port combination {0, 1, 10, 11}, the DMRS ports 0 and 1 are used to support that the number of data layers sent in the first beam information indication direction corresponds to the number of RANK layers of 2, the DMRS ports 10 and 11 are used to support that the number of data layers sent in the second beam information indication direction corresponds to the number of RANK layers of 2, the DMRS ports 0 and 1 are quasi co-located, and the DMRS ports 10 and 11 are quasi co-located.

Optionally, a transmission mode of PUSCH coordinated transmission sent through multiple panels facing multiple TRPs is spatial division multiplexing (SDM) mode.

Optionally, the first beam information indication direction or the second beam information indication direction is determined by uplink detection resource indication information (SRI) or uplink transmission configuration indication information (UL TCI).

Optionally, the first beam information indication direction corresponds to a transmission beam direction of a first Panel on the terminal or a transmission beam direction facing a first TRP of the network device; the second beam information indication direction corresponds to a transmission beam direction of a second Panel on the terminal or a transmission beam direction facing a second TRP of the network device.

Optionally, the DMRS configuration information is indicated through a higher-layer signaling.

Optionally, the number of RANK layers for data transmission is indicated by a downlink control information (DCI) signaling.

Optionally, the DMRS port allocation information is determined by an antenna port indication field in a DCI signaling.

In a second aspect, embodiments of the present invention provide another demodulation reference signal (DMRS) port allocation method for coordinated multiple antenna panels transmission. The method is performed by a network device, and the method includes:
sending DMRS configuration information and a number of RANK layers for data transmission to a terminal, in which the DMRS configuration information and the number of RANK layers for data transmission are used to read a DMRS port allocation table, the DMRS port allocation table includes at least one DMRS port configuration, the DMRS port configuration corresponds to a PUSCH for coordinated transmission sent based on multiple antenna panel facing a TRP, and the DMRS configuration information includes a DMRS type and a maximum number of front-load DMRS symbols; and
sending DMRS port allocation information to the terminal, in which the DMRS port allocation information is used to query a DMRS port configuration in the DMRS port allocation table, in which the DMRS port configuration is used to support RANK combinations for sending data transmission layers of different TRP directions on different panels.

Optionally, the DMRS configuration information is carried in a higher-layer signaling.

Optionally, the number of RANK layers for data transmission is carried in a downlink control information (DCI) signaling.

Optionally, the DMRS port allocation information is carried by an antenna port indication field in a DCI signaling.

In this technical solution, DMRS configuration information and downlink control information (DCI) signaling are provided to enable the terminal to determine the DMRS port allocation corresponding to the RANK combination for sending data layers in different TRP directions on different panels, thereby improving communication reliability and efficiency and avoiding communication resource waste.

In a third aspect, embodiments of the present invention provide a communication apparatus. The communication apparatus has some or all of the functions of the terminal in the method described in the first aspect above, for example, the functions of the communication apparatus may have some or all of the functions in the embodiments of the present invention, or may have the functions of separately implementing any of the embodiments of the present invention. The functions may be implemented by hardware or by executing corresponding software through hardware. The hardware or software includes one or more units or modules corresponding to the above functions.

In an implementation, the structure of the communication apparatus may include a transceiver module and a processing module, in which the processing module is configured to support the communication apparatus to perform the corresponding functions in the above method. The transceiver module is configured to support communication between the communication apparatus and other devices. The communication apparatus may also include a storage module for coupling with the transceiver module and the processing module, which stores necessary computer programs and data for the communication apparatus.

As an example, the processing module may be a processor, the transceiver module may be a transceiver or communication interface, and the storage module may be a memory. In an implementation, the communication apparatus includes:
a first transceiver module, configured to read a DMRS port allocation table based on DMRS configuration information and a number of RANK layers for data transmission, in which the DMRS port allocation table includes at least one DMRS port configuration, the DMRS port configuration corresponds to a PUSCH for coordinated transmission sent based on multiple antenna panel facing a TRP, and the DMRS configuration information includes a DMRS type and a maximum number of front-load DMRS symbols; and
an allocation module, configured to query the DMRS port allocation table according to DMRS port allocation information, to determine DMRS port configuration, in which the DMRS port configuration is used to support RANK combinations for sending data transmission layers of different TRP directions on different panels.

In a fourth aspect, embodiments of the present invention provide another communication apparatus. The communication apparatus has some or all of the functions of the terminal in the method described in the second aspect above, for example, the functions of the communication apparatus may have some or all of the functions in the embodiments of the present invention, or may have the functions of separately implementing any of the embodiments of the present invention. The functions may be implemented by hardware or by executing corresponding software through hardware. The hardware or software includes one or more units or modules corresponding to the above functions.

In an implementation, the structure of the communication apparatus may include a transceiver module and a processing module, in which the processing module is configured to support the communication apparatus to perform the corresponding functions in the above method. The transceiver module is configured to support communication between the communication apparatus and other devices. The communication apparatus may also include a storage module for coupling with the transceiver module and the processing module, which stores necessary computer programs and data for the communication apparatus.

As an example, the processing module may be a processor, the transceiver module may be a transceiver or communication interface, and the storage module may be a memory. In an implementation, the communication apparatus includes:
a second transceiver module, configured to send DMRS configuration information and a number of RANK layers for data transmission to a terminal, in which the DMRS configuration information and the number of RANK layers for data transmission are used to read a DMRS port allocation table, the DMRS port allocation table includes at least one DMRS port configuration, the DMRS port configuration corresponds to a PUSCH for coordinated transmission sent based on multiple antenna panel facing a TRP, and the DMRS configuration information includes a DMRS type and a maximum number of front-load DMRS symbols; and
a third transceiver module, configured to send DMRS port allocation information to the terminal, in which the DMRS port allocation information is used to query DMRS port configuration in the DMRS port allocation table, in which the DMRS port configuration is used to support RANK combinations for sending data transmission layers of different TRP directions on different panels.

In a fifth aspect, embodiments of the present invention provide a communication apparatus. The communication apparatus includes a processor. When the processor calls the computer program in the memory, the method described in the first aspect above is performed.

In a sixth aspect, embodiments of the present invention provide a communication apparatus. The communication apparatus includes a processor. When the processor calls the computer program in the memory, the method described in the second aspect above is performed.

In a seventh aspect, embodiments of the present invention provide a communication apparatus. The communication apparatus includes a processor and a memory. The memory stores a computer program, and the processor executes the computer program stored in the memory, to cause the communication apparatus to implement the method in the first aspect above.

In an eighth aspect, embodiments of the present invention provide a communication apparatus. The communication apparatus includes a processor and a memory. The memory stores a computer program, and the processor executes the computer program stored in the memory, to cause the communication apparatus to implement the method in the second aspect above.

In a ninth aspect, embodiments of the present invention provide a communication apparatus. The communication apparatus includes a processor and an interface circuit. The interface circuit is configured to receive code instructions and transmit the code instructions to the processor. The processor is configured to run the code instructions to cause the device to implement the method in the first aspect above.

In a tenth aspect, embodiments of the present invention provide a communication apparatus. The communication apparatus includes a processor and an interface circuit. The interface circuit is configured to receive code instructions and transmit the code instructions to the processor. The processor is configured to run the code instructions to cause the device to implement the method in the second aspect above.

In an eleventh aspect, embodiments of the present invention provide a demodulation reference signal (DMRS) port allocation system for coordinated multiple antenna panels transmission. The system includes a communication apparatus as described in the third aspect and a communication apparatus as described in the fourth aspect, or the system includes a communication apparatus as described in the fifth aspect and a communication apparatus as described in the sixth aspect, or the system includes a communication apparatus as described in the seventh aspect and a communication apparatus as described in the eighth aspect, or the system includes a communication apparatus as described in the ninth aspect and a communication apparatus as described in the tenth aspect.

In a twelfth aspect, embodiments of the present invention provide a computer readable storage medium, configured to store instructions used by the terminal. When the instructions are executed, the terminal is enabled to execute the method described in the first aspect.

In a thirteenth aspect, embodiments of the present invention provide a computer readable storage medium, configured to store instructions used by the network device. When the instructions are executed, the network device is enabled to execute the method described in the second aspect.

In a fourteenth aspect, the present invention further provide a computer program product including a computer program that, when run on a computer, causes the computer to perform the method described in the first aspect above.

In a fifteenth aspect, the present invention further provide a computer program product including a computer program that, when run on a computer, causes the computer to perform the method described in the second aspect above.

In a sixteenth aspect, the present invention provides a chip system. The chip system includes at least one processor and interface for supporting the terminal to implement the functions involved in the first aspect, such as determining or processing at least one of the data and information involved in the above methods. In one possible design, the chip system further includes a memory for storing necessary computer programs and data for the terminal. This chip system can be composed of chips or include chips and other discrete components.

In a seventeenth aspect, the present invention provides a chip system. The chip system includes at least one processor and interface for supporting the terminal to implement the functions involved in the second aspect, such as determining or processing at least one of the data and information involved in the above methods. In one possible design, the chip system further includes a memory for storing necessary computer programs and data for the terminal. This chip system can be composed of chips or include chips and other discrete components.

In an eighteenth aspect, the present invention provides a computer program that, when executed on a computer, causes the computer to perform the method described in the first aspect.

In a nineteenth aspect, the present invention provides a computer program that, when executed on a computer, causes the computer to perform the method described in the second aspect.

### BRIEF DESCRIPTION OF THE DRAWINGS

In order to provide a clearer explanation of the technical solution in the embodiments of the present invention or background technology, the accompanying drawings required for use in the embodiments of the present invention or background technology will be described below.
Fig. 1 is a schematic diagram of an architecture of a communication system provided in an embodiment of the present invention.
(A) and (B) in Fig. 2 are schematic diagrams of one DMRS symbol and two DMRS symbols in DMRS type 1 provided in the related art, respectively.
(A) and (B) in Fig. 3 are schematic diagrams of one DMRS symbol and two DMRS symbols in DMRS type 2 provided in the related art, respectively.
Fig. 4 is a schematic flowchart of a DMRS port allocation method for coordinated multiple antenna panel transmission provided in an embodiment of the present invention.
Fig. 5 is a schematic flowchart of a DMRS port allocation method for coordinated multiple antenna panel transmission provided in an embodiment of the present invention.
Fig. 6 is a block diagram of a communication apparatus provided in an embodiment of the present invention.
Fig. 7 is a block diagram of another communication apparatus provided in an embodiment of the present invention.
Fig. 8 is a block diagram of a chip provided in an embodiment of the present invention.

### DETAILED DESCRIPTION

For ease of understanding, terms involved in this invention is firstly introduced.

### 1. Multi-TRP (MTRP)/multi-panel transmission technology

In order to improve coverage at the edge of the cell and provide more balanced service quality within the service area, multi-point collaboration remains an important technical means in NR systems. From the perspective of network architecture, deploying a network with a large number of distributed access points and centralized baseband processing will be more conducive to providing a balanced user experience rate and significantly reducing the latency and signaling overhead caused by handover. With the increase of frequency bands, from the perspective of ensuring network coverage, relatively dense deployment of access points is also required. In the high frequency range, with the improvement of the integration of active antenna devices, there will be a greater tendency to adopt modular active antenna arrays. The antenna array of each TRP can be divided into several relatively independent panels, so the shape and number of ports of the entire array can be flexibly adjusted according to deployment scenarios and business requirements. The panels or TRPs can also be connected by fiber optics for more flexible distributed deployment. In the millimeter wave band, as the wavelength decreases, the blocking effect caused by obstacles such as human bodies or vehicles will become more significant. In this case, from the perspective of ensuring the robustness of the link connection, cooperation between multiple TRPs or panels can also be utilized to transmit/receive from multiple beams at multiple angles, thereby reducing the adverse effects of blocking effects.

According to the mapping relationship of sending signal streams to multiple TRP/Panels, coordinated multiple point transmission technology can be divided into coherent and incoherent transmission. During coherent transmission, each data layer will be mapped onto multiple TRPs/Panels through weighted vectors. Hower, during incoherent transmission, each data stream is only mapped to a portion of the TRP s/Panels. Coherent transmission has higher requirements for synchronization between transmission points and the transmission capability of the backhaul link, making it sensitive to many non-ideal factors in real-world deployment conditions. Relatively speaking, incoherent transmission is less affected by the above factors and is therefore a key consideration for multi-point transmission technology.

It should be noted that the research and standardization work on MTRP in NR Rel-15 has not been fully carried out. R16 mainly focuses on the standardization of the Physical Downlink Shared Channel (PDSCH), while R17 enhances the standardization of Multi-TRP for a PUSCH or Physical Uplink Control Channel (PUCCH), but only standardizes the Time Division Multiplexing (TDM) transmission scheme. Currently, R18 considers simultaneous transmission enhancement based on multi-panel terminal MTRP for the PUSCH/PUSCH.

### 2. DMRS port

For the PDSCH/PUSCH channel, the data layer used for data transmission corresponds to the DMRS port used for demodulation. The design of the data channel (PDSCH/PUSCH) DMRS in NR system mainly includes the following aspects:
Front-load DMRS: Within each scheduling time unit, the location where DMRS first appears should be as close as possible to the starting point of the scheduling. The use of Front-load DMRS helps the receiving side to quickly estimate the channel and perform reception detection, which plays an important role in reducing latency and supporting the so-called self-contained structure. Depending on the total number of orthogonal DMRS ports, Front-load DMRS can occupy up to two consecutive Orthogonal Frequency Division Multiplexing (OFDM) symbols.

Additional DMRS: For low mobility scenarios, Front-load DMRS can achieve channel estimation performance that meets demodulation requirements with lower overhead. However, the NR system considers a maximum mobile speed of up to 500km/h. Faced with such a large dynamic range of mobility, in addition to Front-load DMRS, more DMRS symbols need to be inserted during the scheduling duration in medium/high-speed scenarios to meet the estimation accuracy of channel time-varying. To address this issue, the NR system adopts a DMRS structure that combines Front-load DMRS with additional DMRS with configurable time-domain density. Each additional DMRS pattern is a repetition of the Front-load DMRS.

Within each scheduling time unit, if there is Additional DMRS, the pattern of each Additional DMRS group will be consistent with the Front-load DMRS. Therefore, the pattern design of Front-load DMRS is the foundation of DMRS design. The design concept of Front-load DMRS can be divided into two types. DMRS type 1 adopts the transmission comb COMB+OCC structure, which divides each Code Division Multiplexing (CDM) group into multiple ports through Orthogonal Cover Code (OCC); DMRS type 2 is based on the Frequency Division Multiplexing (FDM)+OCC structure.

Depending on the number of orthogonal ports used for transmission, Front-load DMRS can be configured with a maximum of two OFDM symbols. Considering the factor of power utilization efficiency, when using a two symbol Front-load DMRS, in addition to frequency domain cyclic shift (CS) or OCC, time domain orthogonal cover code (TD-OCC) is also used in the time domain.

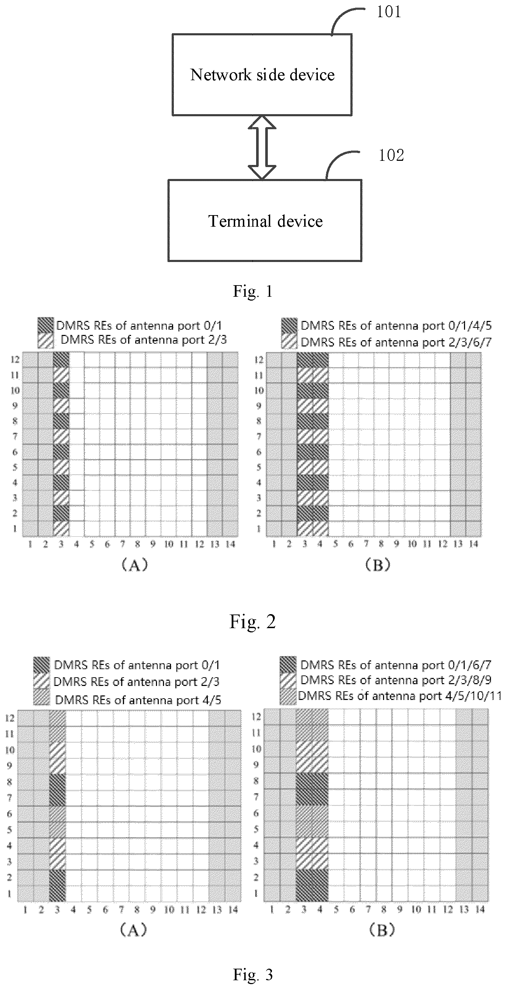

The DMRS type 1 provided in the relevant technology is shown in Fig. 2. In Fig. 2 (A), the front-load DMRS occupies one OFDM symbol, and the subcarriers of each OFDM symbol are divided into two CDM groups. Each CDM group can support the multiplexing of two DMRS ports, and each OFDM symbol can support the multiplexing of up to four DMRS ports. In Fig. 2 (B), the front-load DMRS can occupy up to two OFDM symbols, and the subcarriers of each OFDM symbol are divided into two CDM groups. Each CDM group can support the multiplexing of four DMRS ports, so each OFDM symbol can support the multiplexing of up to eight DMRS ports.

The DMRS type 2 provided in the relevant technology is shown in Fig. 3. In Fig. 3 (A), the front-load DMRS occupies one OFDM symbol, and the subcarriers of each OFDM symbol are divided into three CDM groups. Each CDM group can support the multiplexing of two DMRS ports, and each OFDM symbol can support up to six DMRS ports. In Figure 3 (B), the front-load DMRS can occupy up to two OFDM symbols, and the subcarriers of each OFDM symbol are divided into three CDM groups. Each CDM group can support the multiplexing of four DMRS ports, and each OFDM symbol can support the multiplexing of up to 12 DMRS ports.

In communication scenarios with medium/high-speed motion, in addition to Front-load DMRS, more DMRS symbols need to be inserted within the scheduling duration to meet the estimation accuracy of channel time-varying. The NR system adopts a DMRS structure that combines Front-load DMRS with additional DMRS with configurable time-domain density. Each additional DMRS pattern is a repetition of the Front-load DMRS. Therefore, the Additional DMRS is consistent with the Front-load DMRS, and each group of Additional DMRS can occupy at most two consecutive DMRS symbols. According to specific usage scenarios, up to three sets of Additional DMRS can be configured in each scheduling. The number of additional DMRS depends on the higher-layer parameter configuration and specific scheduling duration.

### 2. Quasi Co-located (QCL)

QCL refers to that the large-scale parameters of the channel experienced by a symbol on one antenna port can be inferred from the channel experienced by a symbol on another antenna port. The large-scale parameters may include delay spread, average delay, Doppler spread, Doppler shift, average gain, and spatial reception parameters.

The concept of QCL was introduced with the emergence of Coordinated Multiple Point Transmission (CoMP) technology. The multiple stations involved in the CoMP transmission process may correspond to multiple geographically different sites or multiple sectors with different antenna panel orientations. For example, when a terminal receives data from different stations, the spatial differences between respective stations can lead to differences in the large-scale channel parameters of the receiving links from different stations, such as Doppler frequency shift, delay spread, etc. The large-scale parameters of the channel will directly affect the adjustment and optimization of the filter coefficients during channel estimation. Corresponding to the signals emitted by different stations, different channel estimation filter parameters should be used to adapt to the corresponding channel propagation characteristics.

Therefore, although the differences in spatial position or angle among different sites are transparent to terminals and CoMP operations themselves, the impact of these spatial differences on large-scale channel parameters is an important factor that terminals need to consider when performing channel estimation and reception detection. The so-called QCL of two antenna ports under certain large-scale parameter meanings refers to the fact that these large-scale parameters of these two ports are the same. Or in other words, as long as certain large-scale parameters of two ports are consistent, regardless of their actual physical location or whether there is a difference in the orientation of the corresponding antenna panels, the terminal can consider these two ports to originate from the same location (i.e. quasi co-located site).

For some application scenarios, considering the possible QCL relationships between various reference signals, from the perspective of simplifying signaling, NR divides several large-scale channel parameters into the following four types for the system to configure/indicate according to different scenarios:
QCL-TypeA: {Doppler shift, Doppler spread, average delay, delay spread} in which, except for spatial reception parameters, all other large-scale parameters are the same. For frequency bands below 6GHz, spatial reception parameters may not be necessary.
QCL-TypeB: {Doppler shift, Doppler spread}, which only applies to the following two situations in the frequency band below 6GH.
QCL-TypeC: {Doppler shift, average delay}
QCL-TypeD: {Space Reception Parameters}. As mentioned earlier, since the space reception parameters mainly target frequency bands above 6GHz, they are treated as a separate QCL type.

According to NR Rel-15, the DMRS ports within each CDM group are QCL.

In order to better understand the demodulation reference signal port allocation method for coordinated multiple antenna panel transmission disclosed in embodiments of the present application, the following first describes the communication system applicable to the embodiments of the present application.

Please refer to Fig. 1, which is a schematic diagram of the architecture of a communication system provided in an embodiment of the present invention. The communication system may include, but is not limited to, one network device and one terminal. The number and form of devices shown in Fig. 1 are for example only and do not constitute a limitation on the embodiments of the present invention. In practical applications, it may include two or more network devices and two or more terminals. The communication system shown in Fig. 1 takes the example of including one network device 101 and one terminal 102.

It should be noted that the technical solution of embodiments of the present invention can be performed by various communication systems, for example, Long Term Evolution (LTE) systems, 5th generation (5G) mobile communication systems, 5G new radio (NR) systems, or other future new mobile communication systems. It should be noted that the side link in the embodiments of the present invention can also be referred to as a sidelink or a direct link.

The network device 101 in embodiments of the present invention is an entity used for transmitting or receiving signals on the network side. For example, the network device 101 may be an evolved NodeB (eNB), a transmission reception point (TRP), a next generation NodeB (gNB) in an NR system, a base station in other future mobile communication systems, or an access node in a wireless fidelity (WiFi) system. The embodiments of this invention do not limit the specific technology and device form adopted by the network devices. The network device provided in the embodiments of the present invention may be composed of a central unit (CU) and a distributed unit (DU), where CU can also be referred to as a control unit. The CU-DU structure can be used to separate the protocol layers of network devices, such as base stations, with some protocol layer functions centrally controlled by CU and the remaining or all protocol layer functions distributed in DU, which is centrally controlled by CU.

The terminal 102 in embodiments of the present invention is an entity on the user side used for receiving or transmitting signals, such as a mobile phone. Terminals can also be referred to as terminals, user equipment (UE), mobile stations (MS), mobile terminals (MTs), etc. Terminals may be communication enabled cars, smart cars, mobile phones, wearable devices, tablets, computers with wireless transmission and reception capabilities, virtual reality (VR) terminals, augmented reality (AR) terminals, wireless terminals in industrial control, wireless terminals in autonomous driving, wireless terminals in remote medical surgery, wireless terminals in smart grids, wireless terminals in transportation safety, wireless terminals in smart cities, and wireless terminals in smart homes, etc. The embodiments of this invention do not limit the specific technology and device form adopted by the terminal.

In related technologies, the DMRS port allocation table for different parameter configurations under the existing uplink CP-OFDM waveform of R17 protocol is shown below.

**Table 1: Antenna port(s), DMRS Type=1, max number of front-load DMRS symbols=1, RANK = 1**

| Value | **Number of DMRS CDM group(s) without data** | **DMRS port(s)** |
|---|---|---|
| 0 | 1 | 0 |
| 1 | 1 | 1 |
| 2 | 2 | 0 |
| 3 | 2 | 1 |
| 4 | 2 | 2 |
| 5 | 2 | 3 |
| 6-7 | Reserved | Reserved |

**Table 2: Antenna port(s), DMRS Type=1, max number of front-load DMRS symbols=1, RANK = 2**

| **Value** | **Number of DMRS CDM group(s) without data** | **DMRS port(s)** |
|---|---|---|
| 0 | 1 | 0,1 |
| 1 | 2 | 0,1 |
| 2 | 2 | 2,3 |
| 3 | 2 | 0,2 |
| 4-7 | Reserved | Reserved |

**Table 3: Antenna port(s), DMRS Type=1, max number of front-load DMRS symbols=1, RANK = 3**

| **Value** | **Number of DMRS CDM group(s) without data** | **DMRS port(s)** |
|---|---|---|
| 0 | 2 | 0-2 |
| 2-7 | Reserved | Reserved |

**Table 4: Antenna port(s), DMRS Type=1, max number of front-load DMRS symbols=1, RANK = 4**

| **Value** | **Number of DMRS CDM group(s) without data** | **DMRS port(s)** |
|---|---|---|
| 0 | 2 | 0-3 |
| 2-7 | Reserved | Reserved |

**Table 5: Antenna port(s), DMRS Type=1, max number of front-load DMRS symbols=2, RANK = 1**

| **Value** | **Number of DMRS CDM group(s) without data** | **DMRS port(s)** | **Number of front-load symbols** |
|---|---|---|---|
| 0 | 1 | 0 | 1 |
| 1 | 1 | 1 | 1 |
| 2 | 2 | 0 | 1 |
| 3 | 2 | 1 | 1 |
| 4 | 2 | 2 | 1 |
| 5 | 2 | 3 | 1 |
| 6 | 2 | 0 | 2 |
| 7 | 2 | 1 | 2 |
| 8 | 2 | 2 | 2 |
| 9 | 2 | 3 | 2 |
| 10 | 2 | 4 | 2 |
| 11 | 2 | 5 | 2 |
| 12 | 2 | 6 | 2 |
| 13 | 2 | 7 | 2 |
| 14-15 | Reserved | Reserved | Reserved |

**Table 6: Antenna port(s), DMRS Type=1, max number of front-load DMRS symbols=2, RANK = 2**

| **Value** | **Number of DMRS CDM group(s) without data** | **DMRS port(s)** | **Number of front-load symbols** |
|---|---|---|---|
| 0 | 1 | 0,1 | 1 |
| 1 | 2 | 0,1 | 1 |
| 2 | 2 | 2,3 | 1 |
| 3 | 2 | 0,2 | 1 |
| 4 | 2 | 0,1 | 2 |
| 5 | 2 | 2,3 | 2 |
| 6 | 2 | 4,5 | 2 |
| 7 | 2 | 6,7 | 2 |
| 8 | 2 | 0,4 | 2 |
| 9 | 2 | 2,6 | 2 |
| 10-15 | Reserved | Reserved | Reserved |

**Table 7: Antenna port(s), DMRS Type=1, max number of front-load DMRS symbols=2, RANK = 3**

| **Value** | **Number of DMRS CDM group(s) without data** | **DMRS port(s)** | **Number of front-load symbols** |
|---|---|---|---|
| 0 | 2 | 0-2 | 1 |
| 1 | 2 | 0,1,4 | 2 |
| 2 | 2 | 2,3,6 | 2 |
| 3-15 | Reserved | Reserved | Reserved |

**Table 8: Antenna port(s), DMRS Type=1, max number of front-load DMRS symbols=2, RANK = 4**

| **Value** | **Number of DMRS CDM group(s) without data** | **DMRS port(s)** | **Number of front-load symbols** |
|---|---|---|---|
| 0 | 2 | 0-3 | 1 |
| 1 | 2 | 0,1,4,5 | 2 |
| 2 | 2 | 2,3,6,7 | 2 |
| 3 | 2 | 0,2,4,6 | 2 |
| 4-15 | Reserved | Reserved | Reserved |

**Table 9: Antenna port(s), DMRS Type=2, max number of front-load DMRS symbols=1, RANK = 1**

| **Value** | **Number of DMRS CDM group(s) without data** | **DMRS port(s)** |
|---|---|---|
| 0 | 1 | 0 |
| 1 | 1 | 1 |
| 2 | 2 | 0 |
| 3 | 2 | 1 |
| 4 | 2 | 2 |
| 5 | 2 | 3 |
| 6 | 3 | 0 |
| 7 | 3 | 1 |
| 8 | 3 | 2 |
| 9 | 3 | 3 |
| 10 | 3 | 4 |
| 11 | 3 | 5 |
| 12-15 | Reserved | Reserved |

**Table 10: Antenna port(s), DMRS Type=2, max number of front-load DMRS symbols=1, RANK = 2**

| **Value** | **Number of DMRS CDM group(s) without data** | **DMRS port(s)** |
|---|---|---|
| 0 | 1 | 0,1 |
| 1 | 2 | 0,1 |
| 2 | 2 | 2,3 |
| 3 | 3 | 0,1 |
| 4 | 3 | 2,3 |
| 5 | 3 | 4,5 |
| 6 | 2 | 0,2 |
| 7-15 | Reserved | Reserved |

**Table 11: Antenna port(s), DMRS Type=2, max number of front-load DMRS symbols=1, RANK = 3**

| **Value** | **Number of DMRS CDM group(s) without data** | **DMRS port(s)** |
|---|---|---|
| 0 | 2 | 0-2 |
| 1 | 3 | 0-2 |
| 2 | 3 | 3-5 |
| 3-15 | Reserved | Reserved |

**Table 12: Antenna port(s), DMRS Type=2, max number of front-load DMRS symbols=1, RANK = 4**

| **Value** | **Number of DMRS CDM group(s) without data** | **DMRS port(s)** |
|---|---|---|
| 0 | 2 | 0-3 |
| 1 | 3 | 0-3 |
| 2-15 | Reserved | Reserved |

**Table 13: Antenna port(s), DMRS Type=2, max number of front-load DMRS symbols=2, RANK = 1**

| **Value** | **Number of DMRS CDM group(s) without data** | **DMRS port(s)** | **Number of front-load symbols** |
|---|---|---|---|
| 0 | 1 | 0 | 1 |
| 1 | 1 | 1 | 1 |
| 2 | 2 | 0 | 1 |
| 3 | 2 | 1 | 1 |
| 4 | 2 | 2 | 1 |
| 5 | 2 | 3 | 1 |
| 6 | 3 | 0 | 1 |
| 7 | 3 | 1 | 1 |
| 8 | 3 | 2 | 1 |
| 9 | 3 | 3 | 1 |
| 10 | 3 | 4 | 1 |
| 11 | 3 | 5 | 1 |
| 12 | 3 | 0 | 2 |
| 13 | 3 | 1 | 2 |
| 14 | 3 | 2 | 2 |
| 15 | 3 | 3 | 2 |
| 16 | 3 | 4 | 2 |
| 17 | 3 | 5 | 2 |
| 18 | 3 | 6 | 2 |
| 19 | 3 | 7 | 2 |
| 20 | 3 | 8 | 2 |
| 21 | 3 | 9 | 2 |
| 22 | 3 | 10 | 2 |
| 23 | 3 | 11 | 2 |
| 24 | 1 | 0 | 2 |
| 25 | 1 | 1 | 2 |
| 26 | 1 | 6 | 2 |
| 27 | 1 | 7 | 2 |
| 28-31 | Reserved | Reserved | Reserved |

**Table 14: Antenna port(s), DMRS Type=2, max number of front-load DMRS symbols=2, RANK = 2**

| **Value** | **Number of DMRS CDM group(s) without data** | **DMRS port(s)** | **Number of front-load symbols** |
|---|---|---|---|
| 0 | 1 | 0,1 | 1 |
| 1 | 2 | 0,1 | 1 |
| 2 | 2 | 2,3 | 1 |
| 3 | 3 | 0,1 | 1 |
| 4 | 3 | 2,3 | 1 |
| 5 | 3 | 4,5 | 1 |
| 6 | 2 | 0,2 | 1 |
| 7 | 3 | 0,1 | 2 |
| 8 | 3 | 2,3 | 2 |
| 9 | 3 | 4,5 | 2 |
| 10 | 3 | 6,7 | 2 |
| 11 | 3 | 8,9 | 2 |
| 12 | 3 | 10,11 | 2 |
| 13 | 1 | 0,1 | 2 |
| 14 | 1 | 6,7 | 2 |
| 15 | 2 | 0,1 | 2 |
| 16 | 2 | 2,3 | 2 |
| 17 | 2 | 6,7 | 2 |
| 18 | 2 | 8,9 | 2 |
| 19-31 | Reserved | Reserved | Reserved |

**Table 15: Antenna port(s), DMRS Type=2, max number of front-load DMRS symbols=2, RANK = 3**

| **Value** | **Number of DMRS CDM group(s) without data** | **DMRS port(s)** | **Number of front-load symbols** |
|---|---|---|---|
| 0 | 2 | 0-2 | 1 |
| 1 | 3 | 0-2 | 1 |
| 2 | 3 | 3-5 | 1 |
| 3 | 3 | 0,1,6 | 2 |
| 4 | 3 | 2,3,8 | 2 |
| 5 | 3 | 4,5,10 | 2 |
| 6-31 | Reserved | Reserved | Reserved |

**Table 16: Antenna port(s), DMRS Type=2, max number of front-load DMRS symbols=2, RANK = 4**

| **Value** | **Number of DMRS CDM group(s) without data** | **DMRS port(s)** | **Number of front-load symbols** |
|---|---|---|---|
| 0 | 2 | 0-3 | 1 |
| 1 | 3 | 0-3 | 1 |
| 2 | 3 | 0,1,6,7 | 2 |
| 3 | 3 | 2,3,8,9 | 2 |
| 4 | 3 | 4,5,10,11 | 2 |
| 5-31 | Reserved | Reserved | Reserved |

The table corresponding to the antenna port can be determined based on the DMRS type dmrs-Type, maximum number of front-load DMRS symbols maxLength, and RANK. In each table, Value is the index, which corresponds to the configuration in the corresponding row. Based on the Value, the corresponding DMRS port configuration can be obtained, including the number of DMRS CDM groups without data, DMRS port number, and the number of first-load DMRS symbols.

In the uplink enhancement of R18, it is necessary to consider how to support higher throughput and more reliable transmission performance through simultaneous uplink transmission of multiple Panels/TRPs. In order to support simultaneous uplink SDM transmission schemes, the current RANK combination cannot meet the configuration requirements for flexible transmission. RANK number and allocation. Therefore, based on the current DMRS port allocation combination, it is necessary to consider how to increase different RANK combinations for different RANK numbers under the SDM transmission scheme. The communication conditions vary in different TRP directions. Allocating more DMRS ports in the TRP direction with better communication conditions and fewer DMRS ports in the TRP direction with poorer communication conditions can improve the reliability and efficiency of uplink transmission. However, there are few port allocation methods that support RANK combination in the existing DMRS allocation table.

It can be understood that the communication system described in the embodiments of the present invention is for a clearer explanation of the technical solution provided in the embodiments of the present invention, and does not constitute a limitation on the technical solution provided in the embodiments of the present invention. Those of ordinary skill in the art know that with the evolution of system architecture and the emergence of new business scenarios, the technical solution provided in the embodiments of the present invention is also applicable to similar technical problems.

The following provides a detailed introduction to the demodulation reference signal port allocation method and apparatus for coordinated multiple antenna panel transmission provided in this invention, combined with the accompanying drawings.

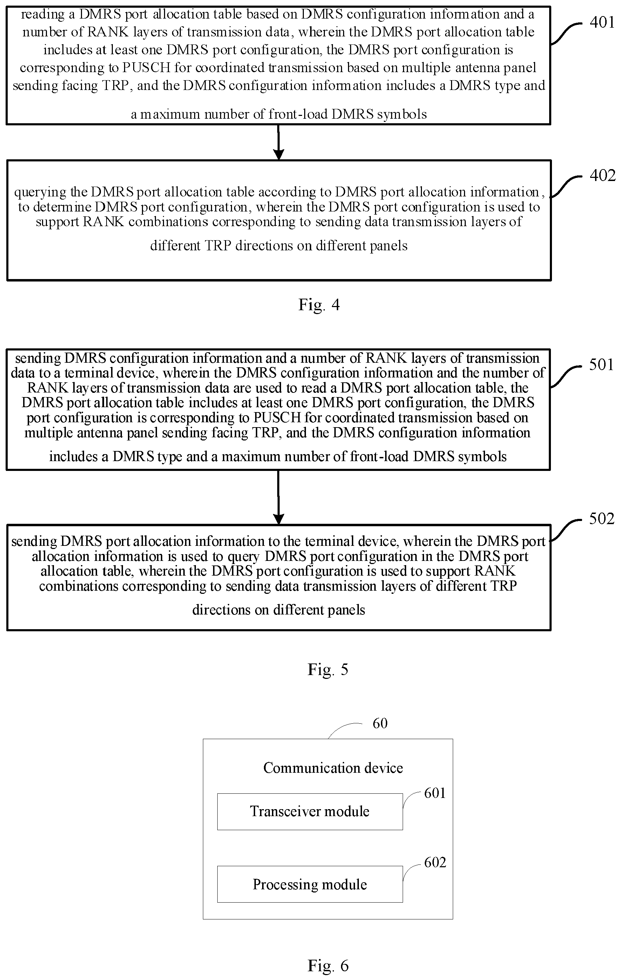

Please refer to Fig. 4, which is a flowchart of a demodulation reference signal port allocation method for coordinated multiple antenna panel transmission provided in an embodiment of the present invention. The method is performed by a terminal. As shown in Fig. 4, the method may include but is not limited to the following steps.

In step 401, a DMRS port allocation table is read based on DMRS configuration information and a a number of RANK layers for data transmission. The DMRS port allocation table includes at least one DMRS port configuration, the DMRS port configuration corresponds to a PUSCH for coordinated transmission sent based on multiple antenna panel facing a TRP, and the DMRS configuration information includes the DMRS type and the maximum number of front-load DMRS symbols.

In embodiments of the present invention, the terminal reads the DMRS port allocation table through the DMRS configuration information and the rank number for transmission data sent by the network device. In the process of configuring the DMRS port, it is necessary to determine the DMRS port allocation table to be queried based on the parameters sent by the network device, to instruct the terminal to perform multi Panel or multi TRP communication. The terminal can uniquely determine a DMRS port allocation table by receiving the DMRS configuration information and RANK number sent by the network side. The RANK number refers to the number of layers used for transmitting data, which is equal to the total number of allocated DMRS ports.

In step 402, the DMRS port allocation table is queried according to DMRS port allocation information, to determine DMRS port configuration. The DMRS port configuration is used to support RANK combinations for sending data transmission layers of different TRP directions on different panels.

In embodiments of the present invention, in order to further determine the DMRS ports allocated by RANK combinations corresponding to different panels in different beam directions, the terminal queries the specific DMRS port configuration in the DMRS port allocation table through the DMRS port allocation information.

In order to enable the Panel on the terminal to send beams in different beam directions, or to send beams to different TRPs on the network devices in different beam directions, it is necessary to allocate corresponding DMRS ports in different beam information indication directions, and it is necessary to ensure that DMRS ports allocated in different beam information indication directions are not co-located, and DMRS ports allocated in the same beam information indication direction are quasi co-located. As mentioned above, the DMRS ports within each CDM group are quasi co-located with each other, which means that it is necessary to allocate DMRS ports from different CDM groups to achieve RANK combination.

In a possible implementation, when the total number of RANK layers for data transmission is 3, in order to use two Panels or two TRPs to transmit data in two beam information indication directions, the data link facing TRP with Panel in the first beam information indication direction needs to support the transmission of data layer with the RANK number being 1, and the data link facing TRP with Panel in the second beam information indication direction needs to support the transmission of data layer with the RANK number being 2, in order to achieve RANK combination of RANK1+RANK2. One DMRS port needs to be allocated to the Panel for transmitting and TPR for receiving in the direction indicated by the first beam information, and two DMRS ports need to be allocated to the Panel for transmitting and TPR for receiving in the direction indicated by the second beam information. The DMRS ports corresponding to the first TRP direction and any one of the DMRS ports corresponding to the second TRP direction are not allowed to be co-located with each other, and the DMRS ports corresponding to the second TRP direction are quasi co-located with each other. The communication conditions are different in different beam information indication directions. More DMRS ports are allocated in the beam information indication direction with better communication conditions, and fewer DMRS ports are allocated in the beam information indication direction with poorer communication conditions. This can improve the reliability and efficiency of uplink transmission between network devices and terminals. However, in the existing DMRS allocation table, there are few port allocation modes that support RANK combination implementation.

By implementing embodiments of the present invention, by receiving DMRS configuration information and downlink control information (DCI) signaling sent by the network device, the terminal is enabled to determine the DMRS port allocation corresponding to the RANK combination for sending data layers in different TRP directions on different panels, thereby improving communication reliability and efficiency and avoiding communication resource waste.

Optionally, when the DMRS type is 1, the maximum number of front-load DMRS symbols is 1 or 2, and the total number of RANK layers for data transmission is 3, the DMRS port configuration corresponding to the RANK combination of supporting 1 layer and 2 layers for sending data links facing different TRP directions through two panels is: DMRS port combination {0, 2, 3},

in which, the DMRS port 0 is used to support that the number of data layers sent in the first beam information indication direction corresponds to the number of RANK layers of 1, the DMRS ports 2 and 3 are used to support that the number of data layers sent in the second beam information indication direction corresponds to the number of RANK layers of 2, and the DMRS ports 2 and 3 are quasi co-located.

In this embodiment of the present invention, subcarriers of each OFDM symbol are divided into two CDM groups. When the number of scheduled RANK layers for data transmission indicated in the DCI signaling is 3, in order to support the implementation of RANK3 using RANK combination of RANK1+RANK2, the DMRS port combination allocated to the two panels is {0, 2, 3}. As shown in Fig. 2 (A) and Fig. 2 (B), DMRS port 0 and DMRS ports 2, 3 do not belong to the same CDM group, that is, the DMRS ports 2 and 3 are quasi co-located with each other. Then, the DMRS port 0 can be configured for the first Panel or the first TRP in the first beam information indication direction, to achieve a corresponding number of RANK layers of 1 for the number of data layers sent in the first beam information indication direction, and the DMRS ports 2 and 3 can be configured for the second Panel or the second TRP in the second beam information indication direction, to achieve a corresponding number of RANK layers of 2 for the number of data layers sent in the second beam information indication direction.

Optionally, when the DMRS type is 2, the maximum number of front-load DMRS symbols is 1 or 2, and the total number of RANK layers for data transmission is 3, the DMRS port configuration corresponding to the RANK combination of supporting 2 layers and 1 layer for sending data links facing different TRP directions through two panels is {0, 1, 3},
in which, the DMRS ports 0 and 1 are used to support that the number of data layers sent in the first beam information indication direction corresponds to the number of RANK layers of 2, the DMRS port 3 is used to support that the number of data layers sent in the second beam information indication direction corresponds to the number of RANK layers of 1, and the DMRS ports 0 and 1 are quasi co-located.

In this embodiment of the present invention, subcarriers of each OFDM symbol are divided into three CDM groups. When the number of scheduled RANK layers for data transmission indicated in the DCI signaling is 3, in order to support the implementation of RANK3 using RANK combination of RANK2+RANK1, the DMRS port combination allocated to the two panels is {0, 1, 3}.

As shown in Fig. 3 (A) and Fig. 3 (B), DMRS ports 0, 1 and DMRS port 3 do not belong to the same CDM group, that is, the DMRS ports 0 and 1 are quasi co-located with each other. Then, the DMRS ports 0 and 1 can be configured for the first Panel or the first TRP in the first beam information indication direction, to achieve a corresponding number of RANK layers of 2 for the number of data layers sent in the first beam information indication direction, and the DMRS port 3 can be configured for the second Panel or the second TRP in the second beam information indication direction, to achieve a corresponding number of RANK layers of 1 for the number of data layers sent in the second beam information indication direction.

Optionally, when the DMRS type is 2, the maximum number of front-load DMRS symbols is 1 or 2, and the total number of RANK layers for data transmission is 3, the DMRS port configuration corresponding to the RANK combination of supporting 1 layer and 2 layers for sending data links facing different TRP directions through two panels is at least one of the following:
DMRS port combination {0, 2, 3},
DMRS port combination {0, 4, 5};
in which, in the DMRS port combination {0, 2, 3}, the DMRS port 0 is used to support that the number of data layers sent in the first beam information indication direction corresponds to the number of RANK layers of 1, the DMRS ports 2 and 3 are used to support that the number of data layers sent in the second beam information indication direction corresponds to the number of RANK layers of 2, and the DMRS ports 2 and 3 are quasi co-located;
in which, in the DMRS port combination {0, 4, 5}, the DMRS port 0 is used to support that the number of data layers sent in the first beam information indication direction corresponds to the number of RANK layers of 1, the DMRS ports 4 and 5 are used to support that the number of data layers sent in the second beam information indication direction corresponds to the number of RANK layers of 2, and the DMRS ports 4 and 5 are quasi co-located.

In this embodiment of the present invention, subcarriers of each OFDM symbol are divided into three CDM groups, and when the number of scheduled RANK layers for data transmission indicated in the DCI signaling is 3, in order to support the implementation of RANK4 using RANK combination of RANK1+RANK2, the DMRS port combinations assigned to the two panels are at least one of DMRS port combinations {0, 2, 3} or {0, 4, 5}.

As shown in Fig. 3(A) and Fig. 3(B), for the DMRS port combination {0, 2, 3}, the DMRS port 0 and the DMRS ports 2, 3 do not belong to the same CDM group, that is, the DMRS ports 2 and 3 are quasi co-located. Then, the DMRS port 0 can be configured for the first Panel or the first TRP in the first beam information indication direction, to achieve a corresponding number of RANK layers of 1 for the number of data layers sent in the first beam information indication direction, and the DMRS ports 2 and 3 can be configured for the second Panel or the second TRP in the second beam information indication direction, to achieve a corresponding number of RANK layers of 2 for the number of data layers sent in the second beam information indication direction.

For the DMRS port combination {0, 4, 5}, the DMRS port 0 and the DMRS ports 4, 5 do not belong to the same CDM group, that is, the DMRS ports 4 and 5 are quasi co-located. Then, the DMRS port 0 can be configured for the first Panel or the first TRP in the first beam information indication direction, to achieve a corresponding number of RANK layers of 1 for the number of data layers sent in the first beam information indication direction, and the DMRS ports 4 and 5 can be configured for the second Panel or the second TRP in the second beam information indication direction, to achieve a corresponding number of RANK layers of 2 for the number of data layers sent in the second beam information indication direction.

Optionally when the DMRS type is 2, the maximum number of front-load DMRS symbols is 1, the total number of RANK layers for data transmission is 4, the DMRS port configuration corresponding to the RANK combination of supporting 2 layers and 2 layers for sending data links facing different TRP directions through two panels is DMRS port combination {0, 1, 4, 5},
in which, the DMRS ports 0 and 1 are used to support that the number of data layers sent in the first beam information indication direction corresponds to the number of RANK layers of 2, the DMRS ports 4 and 5 are used to support that the number of data layers sent in the second beam information indication direction corresponds to the number of RANK layers of 2, the DMRS ports 0 and 1 are quasi co-located, and the DMRS ports 4 and 5 are quasi co-located.

In this embodiment of the present invention, subcarriers of each OFDM symbol are divided into three CDM groups, and when the number of scheduled RANK layers for data transmission indicated in the DCI signaling is 4, in order to support the implementation of RANK4 using RANK combination of RANK2+RANK2, the DMRS port combination assigned to the two panels is DMRS port combinations {0, 1, 4, 5}.

As shown in Fig. 3(A), for the DMRS port combination {0, 1, 4, 5}, the DMRS ports 0, 1 and the DMRS ports 4, 5 do not belong to the same CDM group, that is, the DMRS ports 0 and 1 are quasi co-located, and the DMRS ports 4 and 5 are quasi co-located. Then, the DMRS port 0 and 1 can be configured for the first Panel or the first TRP in the first beam information indication direction, to achieve a corresponding number of RANK layers of 2 for the number of data layers sent in the first beam information indication direction, and the DMRS ports 4 and 5 can be configured for the second Panel or the second TRP in the second beam information indication direction, to achieve a corresponding number of RANK layers of 2 for the number of data layers sent in the second beam information indication direction.

When the DMRS type is 2, the maximum number of front-load DMRS symbols is 2, and the total number of RANK layers for data transmission is 4, the DMRS port configuration corresponding to the RANK combination of supporting 2 layers and 2 layers for sending data links facing different TRP directions through two panels is at least one of the following:
DMRS port combination {0, 1, 4, 5},
DMRS port combination {0, 1, 8, 9},
DMRS port combination {0, 1, 10, 11};
in which, in the DMRS port combination {0, 1, 4, 5}, the DMRS ports 0 and 1 are used to support that the number of data layers sent in the first beam information indication direction corresponds to the number of RANK layers of 2, the DMRS ports 4 and 5 are used to support that the number of data layers sent in the second beam information indication direction corresponds to the number of RANK layers of 2, the DMRS ports 0 and 1 are quasi co-located, and the DMRS ports 4 and 5 are quasi co-located;
in which, in the DMRS port combination {0, 1, 8, 9}, the DMRS ports 0 and 1 are used to support that the number of data layers sent in the first beam information indication direction corresponds to the number of RANK layers of 2, the DMRS ports 8 and 9 are used to support that the number of data layers sent in the second beam information indication direction corresponds to the number of RANK layers of 2, the DMRS ports 0 and 1 are quasi co-located, and the DMRS ports 8 and 9 are quasi co-located;
in which, in the DMRS port combination {0, 1, 10, 11}, the DMRS ports 0 and 1 are used to support that the number of data layers sent in the first beam information indication direction corresponds to the number of RANK layers of 2, the DMRS ports 10 and 11 are used to support that the number of data layers sent in the second beam information indication direction corresponds to the number of RANK layers of 2, the DMRS ports 0 and 1 are quasi co-located, and the DMRS ports 10 and 11 are quasi co-located.

In this embodiment of the present invention, subcarriers of each OFDM symbol are divided into three CDM groups, and when the number of scheduled RANK layers for data transmission indicated in the DCI signaling is 4, in order to support the implementation of RANK4 using RANK combination of RANK2+RANK2, the DMRS port combination assigned to the two panels is DMRS port combinations {0, 1, 4, 5}.

As shown in Fig. 3(B), for the DMRS port combination {0, 1, 4, 5}, the DMRS ports 0, 1 and the DMRS ports 4, 5 do not belong to the same CDM group, that is, the DMRS ports 0 and 1 are quasi co-located, and the DMRS ports 4 and 5 are quasi co-located. Then, the DMRS ports 0 and 1 can be configured for the first Panel or the first TRP in the first beam information indication direction, to achieve a corresponding number of RANK layers of 2 for the number of data layers sent in the first beam information indication direction, and the DMRS ports 4 and 5 can be configured for the second Panel or the second TRP in the second beam information indication direction, to achieve a corresponding number of RANK layers of 2 for the number of data layers sent in the second beam information indication direction.

For the DMRS port combination {0, 1, 8, 9}, the DMRS ports 0, 1 and the DMRS ports 8, 9 do not belong to the same CDM group, that is, the DMRS ports 0 and 1 are quasi co-located, and the DMRS ports 8 and 9 are quasi co-located. Then, the DMRS ports 0 and 1 can be configured for the first Panel or the first TRP in the first beam information indication direction, to achieve a corresponding number of RANK layers of 2 for the number of data layers sent in the first beam information indication direction, and the DMRS ports 8 and 9 can be configured for the second Panel or the second TRP in the second beam information indication direction, to achieve a corresponding number of RANK layers of 2 for the number of data layers sent in the second beam information indication direction.

For the DMRS port combination {0, 1, 10, 11}, the DMRS ports 0, 1 and the DMRS ports 10, 11 do not belong to the same CDM group, that is, the DMRS ports 0 and 1 are quasi co-located, and the DMRS ports 10 and 11 are quasi co-located. Then, the DMRS ports 0 and 1 can be configured for the first Panel or the first TRP in the first beam information indication direction, to achieve a corresponding number of RANK layers of 2 for the number of data layers sent in the first beam information indication direction, and the DMRS ports 10 and 11 can be configured for the second Panel or the second TRP in the second beam information indication direction, to achieve a corresponding number of RANK layers of 2 for the number of data layers sent in the second beam information indication direction.

Optionally, a transmission mode of PUSCH coordinated transmission sent through multiple panels facing multiple TRPs is spatial division multiplexing (SDM) mode.

In embodiments of the present invention, multiple panels of the terminal send beams to multiple TRPs in the network device to cooperate in transmitting data in the PUSCH. The transmission mode is SDM mode, which allows the same frequency band to be reused in different spaces, known as spatial division multiplexing. In mobile communication, adaptive array antennas can be used to form different beams in different user directions to achieve spatial division multiplexing.

Optionally, the first beam information indication direction or the second beam information indication direction is determined by uplink detection resource indication information (SRI) or uplink transmission configuration indication information (UL TCI).

For the case of uplink transmission between two panels or two TRPs, two SRIs-SRI1 and SRI2 can be used to indicate the first beam information indication direction or the second beam information indication direction corresponding to the two panels or two TRPs, respectively. Alternatively, two UL TCIs-TCI1 and TCI2 can be used to indicate the first beam information indication direction or the second beam information indication direction corresponding to the two panels or two TRPs, respectively.

Optionally, the first beam information indication direction corresponds to a transmission beam direction of a first Panel on the terminal or a transmission beam direction facing a first TRP of the network device; the second beam information indication direction corresponds to a transmission beam direction of a second Panel on the terminal or a transmission beam direction facing a second TRP of the network device.

In embodiments of the present invention, the first panel transmits data to the corresponding first TRP in the first beam information indication direction, and the second panel transmits data to the corresponding second TRP in the second beam information indication direction.

Optionally, the DMRS configuration information is indicated by a higher-layer signaling.

Optionally, the number of RANK layers for data transmission is indicated by a DCI signaling.

Optionally, the DMRS port allocation information is determined by an antenna port indication field in the DCI signaling.

In embodiments of the present invention, the antenna port indication field in the DCI signaling indicates the Value in the DMRS port allocation table to determine the DMRS port corresponding to the RANK combination that implements the RANK layers.

Please refer to Fig. 5, which is a schematic flowchart of a DMRS port allocation method for coordinated multiple antenna panel transmission provided in an embodiment of the present invention. The method is performed by a terminal. As shown in Fig. 5, the method may include but is not limited to the following steps.

In step 501, DMRS configuration information and a number of RANK layers for data transmission are sent to a terminal, in which the DMRS configuration information and the number of RANK layers for data transmission are used to read a DMRS port allocation table, the DMRS port allocation table includes at least one DMRS port configuration, the DMRS port configuration corresponds to a PUSCH for coordinated transmission sent based on multiple antenna panel facing a TRP, and the DMRS configuration information includes a DMRS type and a maximum number of front-load DMRS symbols.

Int embodiments of the present invention, the network device instructs the terminal to read the DMRS port allocation table by sending DMRS configuration information and the number of RANK layers for data transmission. In the process of configuring the DMRS ports, it is necessary to determine the DMRS port allocation table to be queried based on the parameters sent by the network device to instruct the terminal to perform multi Panel or multi TRP communication. The DMRS configuration information and the number of RANK layers sent by the network device can uniquely determine one DMRS port allocation table. The number of RANK layers refers to the number of layers used for transmitting data, which is equal to the total number of allocated DMRS ports.

In step 502, DMRS port allocation information is sent to the terminal, in which the DMRS port allocation information is used to query DMRS port configuration in the DMRS port allocation table, in which the DMRS port configuration is used to support RANK combinations for sending data transmission layers of different TRP directions on different panels.

In embodiments of the present invention, in order to further determine the DMRS ports allocated for different RANK combinations of different panels in different beam directions, the network device instructs the terminal to query the specific DMRS port configuration in the DMRS port allocation table through the DMRS port allocation information.

In order to enable the Panel on the terminal to send beams in different beam directions, or to send beams to different TRPs on the network devices in different beam directions, it is necessary to allocate corresponding DMRS ports in different beam information indication directions, and it is necessary to ensure that DMRS ports allocated in different beam information indication directions are not co-located, and DMRS ports allocated in the same beam information indication direction are quasi co-located. As mentioned above, the DMRS ports within each CDM group are quasi co-located with each other, which means that it is necessary to allocate DMRS ports from different CDM groups to achieve RANK combination.

By implementing the embodiments of the present invention, DMRS configuration information and downlink control information (DCI) signaling are sent to enable the terminal to determine the DMRS port allocation corresponding to the RANK combination for sending data layers in different TRP directions on different panels, thereby improving communication reliability and efficiency and avoiding communication resource waste.

In the above embodiments provided by the present invention, the methods provided by the embodiments are introduced from the perspectives of network device and terminal, respectively. In order to achieve the various functions in the methods provided in the embodiments of the present invention, the network device and terminal may include hardware structures and software modules, which can be implemented in the form of hardware structures, software modules, or a combination of hardware structures and software modules. One of the above functions can be executed in the form of hardware structure, software module, or a combination of hardware structure and software module.

Please refer to Fig. 6, which is block diagram of a communication apparatus 60 provided in an embodiment of the present invention. The communication apparatus shown in Fig. 6 may include a transceiver module 601 and a processing module 602. The transceiver module 601 may include a sending module and/or a receiving module. The sending module is used to implement the sending function, and the receiving module is use d to implement the receiving function. The transceiver module 601 may implement the sending function and/or the receiving function.

The communication apparatus 60 may be a terminal (such as the terminal in the aforementioned method embodiments), a device within the terminal, or a device that can be used in conjunction with the terminal. Alternatively, the communication apparatus 60 may be a network device, a device within the network device, or a device that can be used in conjunction with the network device.

The communication 60 is the terminal, and includes:
a first transceiver module, configured to read a DMRS port allocation table based on DMRS configuration information and a number of RANK layers for data transmission, in which the DMRS port allocation table includes at least one DMRS port configuration, the DMRS port configuration corresponds to a PUSCH for coordinated transmission sent based on multiple antenna panel facing a TRP, and the DMRS configuration information includes a DMRS type and a maximum number of front-load DMRS symbols; and
an allocation module, configured to query the DMRS port allocation table according to DMRS port allocation information, to determine DMRS port configuration, in which the DMRS port configuration is used to support RANK combinations for sending data transmission layers of different TRP directions on different panels.

The communication apparatus 60 is the network device, and includes:
a second transceiver module, configured to send DMRS configuration information and a number of RANK layers for data transmission to a terminal, in which the DMRS configuration information and the number of RANK layers for data transmission are used to read a DMRS port allocation table, the DMRS port allocation table includes at least one DMRS port configuration, the DMRS port configuration corresponds to a PUSCH for coordinated transmission sent based on multiple antenna panel facing a TRP, and the DMRS configuration information includes a DMRS type and a maximum number of front-load DMRS symbols; and
a third transceiver module, configured to send DMRS port allocation information to the terminal, in which the DMRS port allocation information is used to query DMRS port configuration in the DMRS port allocation table, in which the DMRS port configuration is used to support RANK combinations for sending data transmission layers of different TRP directions on different panels.

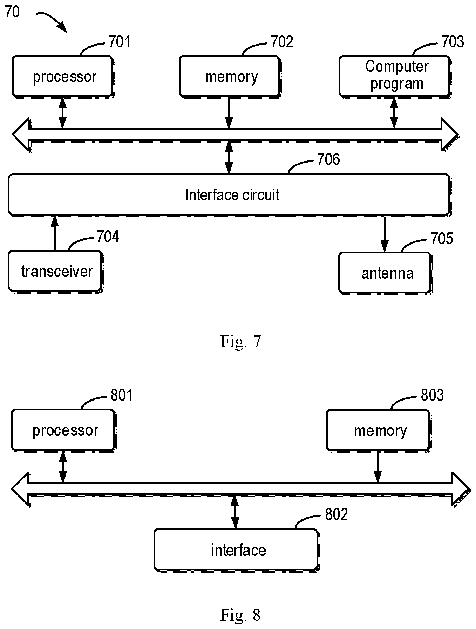

Please refer to Fig. 7, which is a block diagram of another communication apparatus 70 provided in an embodiment of the present invention. The communication apparatus 70 may be a network device, a terminal (such as the terminal in the aforementioned method embodiments), a chip, chip system, or processor that supports the network device to implement the above method, or a chip, chip system, or processor that supports the terminal to implement the above method. This device can be used to implement the methods described in the above method embodiments, which can be referred to in the description of the above method embodiments.

The communication apparatus 70 may include one or more processors 701. The processor 701 may be a general-purpose processor or a dedicated processor, etc. For example, it may be a baseband processor or a central processing unit. The baseband processor can be used to process communication protocols and communication data, while the central processor can be used to control communication apparatuses (such as base stations, baseband chips, terminals, terminal chips, DU or CU, etc.), execute computer programs, and process data from computer programs.

Optionally, the communication apparatus 70 may also include one or more memories 702, on which computer programs 703 may be stored. The processor 701 executes the computer programs 703 to enable the communication apparatus 70 to perform the methods described in the above method embodiments. Optionally, the memory 702 may also store data. The communication apparatus 70 and memory 702 can be set separately or integrated together.

Optionally, the communication apparatus 70 may also include a transceiver 704 and an antenna 705. The transceiver 704 can be referred to as a transceiver unit, transceiver machine, or transceiver circuit, etc., used to achieve transceiver functions. The transceiver 704 can include a receiver and a transmitter, where the receiver can be referred to as a receiver unit or receiving circuit, etc., used to achieve the receiving function; the transmitter can be referred to as a transmitter unit or a transmission circuit, etc., used to implement the transmission function.

Optionally, the communication apparatus 70 may also include one or more interface circuits 706. The interface circuit 706 is used to receive code instructions and transmit them to the processor 701. The processor 701 executes the code instructions to cause the communication apparatus 70 to perform the method described in the above method embodiments.

The communication apparatus 70 is a terminal (such as the terminal in the aforementioned method embodiments): the processor 701 is used to execute steps 401 and 402 shown in Fig. 4.

The communication apparatus 70 is a network device: the transceiver 704 is used to perform steps 501 and 502 shown in Fig. 5.

In one implementation, the processor 701 may include a transceiver for implementing receiving and transmitting functions. For example, the transceiver can be a transceiver circuit, or an interface, or an interface circuit. The transceiver circuit, interface, or interface circuit used to implement the receiving and sending functions can be separate or integrated together. The above-mentioned transceiver circuit, interface or interface circuit can be used for reading and writing code/data, or the above-mentioned transceiver circuit, interface or interface circuit can be used for signal transmission or transfer.

In one implementation, the processor 701 may store a computer program 703 that runs on the processor 701 and enables the communication apparatus 70 to perform the method described in the above method embodiments. The computer program 703 may be fixed in the processor 701, in which case the processor 701 may be implemented by hardware.

In one implementation, the communication apparatus 70 may include a circuit that can perform the functions of sending, receiving, or communicating as described in the aforementioned method embodiments. The processor and transceiver described in this invention can be implemented on integrated circuits (ICs), analog ICs, radio frequency integrated circuits (RFICs), mixed signal ICs, application specific integrated circuits (ASICs), printed circuit boards (PCBs), electronic devices, etc. The processor and transceiver can also be manufactured using various IC process technologies, such as complementary metal oxide semiconductor (CMOS), n-type metal oxide semiconductor (NMOS), positive channel metal oxide semiconductor (PMOS), bipolar junction transistor (BJT), bipolar CMOS, silicon germanium (SiGe), gallium arsenide (GaAs), etc.

The communication apparatus described in the above embodiments may be a network device or a terminal (such as the terminal in the aforementioned method embodiments), but the scope of the communication apparatus described in this invention is not limited to this, and the structure of the communication apparatus may not be limited by Fig. 7. The communication apparatus may be a standalone device or a part of a larger device. For example, the communication apparatus may be:
(1) Independent integrated circuit IC, or chip, or chip system or subsystem;
(2) A set of one or more ICs, optionally including storage components for storing data and computer programs;
(3) ASIC, such as modems;
(4) Modules that can be embedded in other devices;
(5) Receiver, terminal, intelligent terminal, cellular phone, wireless device, handheld device, mobile unit, vehicle mounted device, network device, cloud device, artificial intelligence device, etc;
(6) Others and so on.

For the case where the communication apparatus can be a chip or a chip system, please refer to the schematic diagram of the chip structure shown in Fig. 8. The chip shown in Fig. 8 includes a processor 801 and an interface 802. The number of processors 801 may be one or more, and the number of interfaces 802 may be multiple.

Optionally, the chip also includes a memory 803 for storing necessary computer programs and data.

Technicians in this field can also understand that various illustrative logical blocks and steps listed in the embodiments of the present invention can be implemented through electronic hardware, computer software, or a combination of both. Whether such functionality is implemented through hardware or software depends on the specific application and the design requirements of the entire system. Technicians in this field can use various methods to implement the described functions for each specific application, but such implementation should not be understood as exceeding the scope of protection of the disclosed embodiments.

An embodiment of the present invention also provides a DMRS port allocation system for coordinated multiple antenna panel transmission, which includes a communication apparatus as a terminal (such as the first terminal in the aforementioned method embodiment) and a communication apparatus as a network device in the aforementioned embodiment, or the system includes a communication apparatus as a terminal (such as the first terminal in the aforementioned method embodiment) and a communication apparatus as a network device in the aforementioned embodiment.

The present invention also provides a readable storage medium storing instructions that, when executed by a computer, implement the functions of any of the method embodiments described above.

The present invention also provides a computer program product that, when executed by a computer, implements the functions of any of the method embodiments described above.

In the above embodiments, it can be fully or partially implemented through software, hardware, firmware, or any combination thereof. When implemented using software, it can be fully or partially implemented in the form of a computer program product. The computer program product includes one or more computer programs. When loading and executing the computer program on a computer, all or part of the process or function described in embodiments of the present invention is generated. The computer may be a general-purpose computer, a specialized computer, a computer network, or other programmable device. The computer program can be stored in a computer-readable storage medium or transmitted from one computer-readable storage medium to another. For example, the computer program can be transmitted from a website site, computer, server, or data center to another website site, computer, server, or data center via wired (such as coaxial cable, fiber optic, digital subscriber line (DSL)) or wireless (such as infrared, wireless, microwave, etc.) means. The computer-readable storage medium can be any available medium that a computer can access, or a data storage device such as a server or data center that integrates one or more available media. The available media can be magnetic media (such as floppy disks, hard disks, magnetic tapes), optical media (such as high-density digital video discs (DVDs)), or semiconductor media (such as solid state disks (SSDs)).

Those skilled in the art can understand that the first, second, and other numerical numbers mentioned in this invention are only for the convenience of description and are not intended to limit the scope of the disclosed embodiments, but also indicate the order of occurrence.

"At least one" in the present invention can also be described as one or more, and "multiple" \can be two, three, four, or more, without limitation in this invention. In embodiments of the present invention, for a type of technical feature, the technical features in the type of technical feature are distinguished by "first", "second", "third", "A", "B", "C", and "D", etc. The technical features described by "first", "second", "third", "A", "B", "C", and "D" have no order of priority or size.

The corresponding relationships shown in each table in this invention can be configured or predefined. The values of the information in each table are only examples and can be configured as other values, which are not limited in this application. When configuring the correspondence between information and various parameters, it is not necessarily required to configure all the corresponding relationships shown in each table. For example, in the table of this application, the corresponding relationships shown in certain rows may not be configured. For example, appropriate deformation adjustments can be made based on the above table, such as splitting, merging, and so on. The titles in the above tables indicate that the names of the parameters can also be other names that the communication apparatus can understand, and the values or representations of the parameters can also be other values or representations that the communication apparatus can understand. The above tables can also be implemented using other data structures, such as arrays, queues, containers, stacks, linear tables, pointers, linked lists, trees, graphs, structures, classes, heaps, hash tables, etc.

The predefined in this invention can be understood as defined, defined in advance, stored, pre-stored, pre-negotiated, pre-configured, solidified, or pre-fired.

Those skilled in the art will recognize that the units and algorithm steps described in the embodiments disclosed in this article can be implemented using electronic hardware, or a combination of computer software and electronic hardware. Whether these functions are executed in hardware or software depends on the specific application and design constraints of the technical solution. Professional technicians can use different methods to achieve the described functions for each specific application, but such implementation should not be considered beyond the scope of this application.

Technicians in the relevant field can clearly understand that, for the convenience and conciseness of description, the specific working process of the system, device, and unit described above can refer to the corresponding process in the aforementioned method embodiments, which will not be repeated here.

The above is only a specific implementation of the present application, but the scope of protection of the present application is not limited to this. Any skilled person familiar with the technical field can easily think of changes or replacements within the technical scope disclosed in the present application, which should be included in the scope of protection of the present application. Therefore, the scope of protection of this application should be based on the scope of protection of the claims.

## Claims

1. A demodulation reference signal (DMRS) port allocation method for coordinated multiple antenna panels transmission, performed by a terminal, the method comprising:
reading a DMRS port allocation table based on DMRS configuration information and a number of RANK layers for data transmission, wherein the DMRS port allocation table comprises at least one DMRS port configuration, the at least one DMRS port configuration corresponds to a physical uplink shared channel (PUSCH) for coordinated transmission to a transmission reception pair (TRP) based on multiple antenna panels, and the DMRS configuration information comprises a DMRS type and a maximum number of front-load DMRS symbols; and
querying the DMRS port allocation table according to DMRS port allocation information, to determine a DMRS port configuration, wherein the DMRS port configuration is used to support RANK combinations for sending data transmission layers in different TRP directions on different panels.

2. The method of claim 1, wherein when the DMRS type is 1, the maximum number of front-load DMRS symbols is 1 or 2, and a total number of RANK layers for data transmission is 3, a DMRS port configuration corresponding to a RANK combination of respectively supporting 1 layer and 2 layers for sending data links facing different TRP directions through two panels is: DMRS port combination {0, 2, 3},
wherein, the DMRS port 0 is used to support that a number of data layers sent in a first beam information indication direction corresponds to the number of RANK layers of 1, the DMRS ports 2 and 3 are used to support that a number of data layers sent in a second beam information indication direction corresponds to the number of RANK layers of 1, and the DMRS ports 2 and 3 are quasi co-located.

3. The method of claim 1, wherein when the DMRS type is 2, the maximum number of front-load DMRS symbols is 1 or 2, and a total number of RANK layers for data transmission is 3, a DMRS port configuration corresponding to a RANK combination of respectively supporting 2 layers and 1 layers for sending data links facing different TRP directions through two panels is: DMRS port combination {0, 1, 3},
wherein, the DMRS ports 0 and 1 are used to support that a number of data layers sent in a first beam information indication direction corresponds to the number of RANK layers of 2, the DMRS port 3 is used to support that a number of data layers sent in a second beam information indication direction corresponds to the number of RANK layers of 1, and the DMRS ports 0 and 1 are quasi co-located.

4. The method of claim 1, wherein when the DMRS type is 2, the maximum number of front-load DMRS symbols is 1 or 2, and a total number of RANK layers for data transmission is 3, a DMRS port configuration corresponding to a RANK combination of respectively supporting 1 layer and 2 layers for sending data links facing different TRP directions through two panels comprises at least one of the following:
DMRS port combination {0, 2, 3},
DMRS port combination {0, 4, 5};
wherein, for the DMRS port combination {0, 2, 3}, the DMRS port 0 is used to support that a number of data layers sent in a first beam information indication direction corresponds to the number of RANK layers of 1, the DMRS ports 2, 3 are used to support that a number of data layers sent in a second beam information indication direction corresponds to the number of RANK layers of 2, and the DMRS ports 2 and 3 are quasi co-located;
wherein, for the DMRS port combination {0, 4, 5}, the DMRS port 0 is used to support that the number of data layers sent in the first beam information indication direction corresponds to the number of RANK layers of 1, the DMRS ports 4, 5 are used to support that the number of data layers sent in the second beam information indication direction corresponds to the number of RANK layers of 2, and the DMRS ports 4, and 5 are quasi co-located.

5. The method of claim 1, wherein when the DMRS type is 2, the maximum number of front-load DMRS symbols is 1, and a total number of RANK layers for data transmission is 4, a DMRS port configuration corresponding to a RANK combination of supporting 2 layers and 2 layers for sending data links facing different TRP directions through two panels is DMRS port combination {0, 1, 4, 5},
Wherein, the DMRS ports 0 and 1 are used to support that a number of data layers sent in a first beam information indication direction corresponds to the number of RANK layers of 2, the DMRS ports 4 and 5 are used to support that a number of data layers sent in a second beam information indication direction corresponds to the number of RANK layers of 2, the DMRS ports 0 and 1 are quasi co-located, and the DMRS ports 4 and 5 are quasi co-located.

6. The method of claim 1, wherein when the DMRS type is 2, the maximum number of front-load DMRS symbols is 2, and a total number of RANK layers for data transmission is 4, a DMRS port configuration corresponding to a RANK combination of supporting 2 layers and 2 layers for sending data links facing different TRP directions through two panels comprises at least one of the followings:
DMRS port combination {0, 1, 4, 5},
DMRS port combination {0, 1, 8, 9},
DMRS port combination {0, 1, 10, 11};
wherein, for the DMRS port combination{0, 1, 4, 5}, the DMRS ports 0 and 1 are used to support that a number of data layers sent in a first beam information indication direction corresponds to the number of RANK layers of 2, the DMRS ports 4 and 5 are used to support that a number of data layers sent in a second beam information indication direction corresponds to the number of RANK layers of 2, the DMRS ports 0 and 1 are quasi co-located, and the DMRS ports 4 and 5 are quasi co-located;
wherein, for the DMRS port combination {0, 1, 8, 9}, the DMRS ports 0 and 1 are used to support that the number of data layers sent in the first beam information indication direction corresponds to the number of RANK layers of 2, the DMRS ports 8 and 9 are used to support that the number of data layers sent in the second beam information indication direction corresponds to the number of RANK layers of 2, the DMRS ports 0 and 1 are quasi co-located, and the DMRS ports 8 and 9 are quasi co-located;
wherein, for the DMRS port combination {0, 1, 10, 11}, the DMRS ports 0 and 1 are used to support that the number of data layers sent in the first beam information indication direction corresponds to the number of RANK layers of 2, the DMRS ports 10 and 11 are used to support that the number of data layers sent in the second beam information indication direction corresponds to the number of RANK layers of 2, the DMRS ports 0 and 1 are quasi co-located, and the DMRS ports 10 and 11 are quasi co-located.

7. The method of any of claims 1-6, wherein a transmission mode of PUSCH coordinated transmission sent through multiple panels facing multiple TRPs is spatial division multiplexing (SDM) mode.

8. The method of any of claims 2-6, wherein the first beam information indication direction or the second beam information indication direction is determined by uplink detection resource indication information (SRI) or uplink transmission configuration indication information (UL TCI).

9. The method of any of claims 2-6, wherein the first beam information indication direction corresponds to a transmission beam direction of a first Panel on the terminal or a transmission beam direction facing a first TRP of a network device; the second beam information indication direction corresponds to a transmission beam direction of a second Panel on the terminal or a transmission beam direction facing a second TRP of the network device.

10. The method of any of claims 1-6, wherein the DMRS configuration information is indicated through a higher-layer signaling.

11. The method of any of claims 1-6, wherein the number of RANK layers for data transmission is indicated by a downlink control information (DCI) signaling.

12. The method of any of claims 1-6, wherein the DMRS port allocation information is determined by an antenna port indication field in a DCI signaling.

13. A demodulation reference signal (DMRS) port allocation method, performed by a network device, the method comprising:
sending DMRS configuration information and a number of RANK layers for data transmission to a terminal, wherein the DMRS configuration information and the number of RANK layers for data transmission are used to read a DMRS port allocation table, the DMRS port allocation table comprises at least one DMRS port configuration, the at least one DMRS port configuration corresponds to a physical uplink shared channel (PUSCH) for coordinated transmission to a transmission reception pair (TRP) based on multiple antenna panels, and the DMRS configuration information comprises a DMRS type and a maximum number of front-load DMRS symbols; and
sending DMRS port allocation information to the terminal, wherein the DMRS port allocation information is used to query a DMRS port configuration in the DMRS port allocation table, wherein the DMRS port configuration is used to support RANK combinations for sending data transmission layers of different TRP directions on different panels.

14. The method of claim 13, wherein the DMRS configuration information is carried in a higher-layer signaling.

15. The method of claim 13, wherein the number of RANK layers for data transmission is carried in a downlink control information (DCI) signaling.

16. The method of claim 13, wherein the DMRS port allocation information is carried by an antenna port indication field in a DCI signaling.

17. A demodulation reference signal (DMRS) port allocation apparatus, applied to a terminal, comprising:
a first transceiver module, configured to read a DMRS port allocation table based on DMRS configuration information and a number of RANK layers for data transmission, wherein the DMRS port allocation table comprises at least one DMRS port configuration, the at least one DMRS port configuration corresponds to a physical uplink shared channel (PUSCH) for coordinated transmission sent based on multiple antenna panel facing a transmission reception pair (TRP), and the DMRS configuration information comprises a DMRS type and a maximum number of front-load DMRS symbols; and
an allocation module, configured to query the DMRS port allocation table according to DMRS port allocation information, to determine a DMRS port configuration, wherein the DMRS port configuration is used to support RANK combinations for sending data transmission layers of different TRP directions on different panels.

18. A demodulation reference signal (DMRS) port allocation apparatus, applied to a network device, comprising:
a second transceiver module, configured to send DMRS configuration information and a number of RANK layers for data transmission to a terminal device, wherein the DMRS configuration information and the number of RANK layers for data transmission are used to read a DMRS port allocation table, the DMRS port allocation table comprises at least one DMRS port configuration, the at least one DMRS port configuration corresponds to a physical uplink shared channel (PUSCH) for coordinated transmission sent based on multiple antenna panel facing a transmission reception pair (TRP), and the DMRS configuration information comprises a DMRS type and a maximum number of front-load DMRS symbols; and
a third transceiver module, configured to send DMRS port allocation information to the terminal device, wherein the DMRS port allocation information is used to query a DMRS port configuration in the DMRS port allocation table, wherein the DMRS port configuration is used to support RANK combinations for sending data transmission layers of different TRP directions on different panels.

19. A communication apparatus, comprising a processor and a memory, wherein the memory stores a computer program, and the processor is configured to execute the computer program stored in the memory, to cause the device to implement the method of any of claims 1-12 or claims 13-16.

20. A communication apparatus, comprising a processor and an interface circuit, wherein
the interface circuit is configured to receive code instructions and transmit the code instructions to the processor;
the processor is configured to run the code instructions to implement the method of any of claims 1-12 or claims 13-16.
